Europäisches Patentamt

European Patent Office

Office européen des brevets

(11) Publication number: 0 382 352
A2

# (12) EUROPEAN PATENT APPLICATION

(21) Application number: 90300524.7

(22) Date of filing: 18.01.90

(51) Int. Cl.5: G06F 3/023, G06K 11/06

(30) Priority: 10.02.89 US 309829

(43) Date of publication of application:
16.08.90 Bulletin 90/33

(84) Designated Contracting States:
DE FR GB

(71) Applicant: Hewlett-Packard Company
3000 Hanover Street
Palo Alto California 94304(US)

(72) Inventor: Cloutier, Frank
37 Stevens Road, 04-01
Singapore 1025(SG)
Inventor: Long, Shyh Lai
476 Lorong 3, Geylang
Singapore 1438(SG)
Inventor: Quek, So Huat
25 Taman Permata
Singapore 2057(SG)

(74) Representative: Colgan, Stephen James et al
CARPMAELS & RANSFORD 43 Bloomsbury
Square
London WC1A 2RA(GB)

(54) Cursor control mechanism.

(57) A hand-controlled mechanism is described for producing signals to move the position of the cursor in a computer display. The mechanism includes a cylinder (10) rotatable about an axis, and having plurality of sensible markings (16) rotatable therewith. A first encoder (18) is provided which produces outputs indicative of the movement of the markings. A slider bar (24) is provided which is moveable in a direction parallel to the axis of the cylinder (10) but independent thereof. The slider bar (24) has another movement encoder (32) associated therewith. A decoder responsive to the outputs from both encoders provides signals to move the position of the display cursor.

FIG. 1

TO DECODER

TO DECODER

# CURSOR CONTROL MECHANISM

## FIELD OF THE INVENTION

This invention relates to apparatus for controlling an alpha-numeric display device and, more particularly, an apparatus for controlling the position of an indicator on the screen of a display device.

## BACKGROUND OF THE INVENTION

The mouse is a commonly used input device for computer display terminals, and provides signals to control the position of a cursor on the display face. The mouse is configured as a small, box-like device and is placed on and moved over a flat surface in various directions.

As position changing signals are generated by the mouse, they are transmitted to the terminal which causes a corresponding movement of the cursor.

While the mouse is useful for many applications, it requires that one hand be withdrawn from the terminal's keyboard to control its movement. Recently, a new mechanism has been developed which provides directional control signals for a cursor, but allows both of the users hands to remain in contact with the keyboard. In U.S. Patent 4,712,101 to C. F. Culver, this mechanism is shown as comprising a rotatable shaft on which a cylinder has been mounted. The mechanism is constructed as part of or adjacent to a keyboard and is positioned on the user side of the shift bar. In one configuration, it comprises a separate entity which sits immediately in front of the keyboard.

Rotation of the cylinder rotates the shaft; however, the cylinder is also able, simultaneously, to translate longitudinally along the axis of the shaft. One encoder is coupled to the shaft and provides rotary shaft movement signals which control one direction of movement of the cursor. Another encoder is coupled to the cylinder and provides a signal indicative of its longitudinal movement. That signal is employed to control the cursor's movement in a second direction on the display. As a result of this structure, a cursor's position in the display is controllable by the action of one hand both rotating and translating the cylinder while it remains in contact with the keyboard.

Culver employs a variety of encoders to derive his motion signals. In one version, he employs a code wheel rotatable with the shaft and a second encoder wheel which is operated by a cable connected to the cylinder. In another version, the rotary wheel is coupled to the shaft by a gear arrangement while longitudinal movement is sensed by a linear encoder directly coupled to the cylinder. In still another version, Culver suggests the use of a linear resistive strip for longitudinal position sensing.

In U.S. Patent 4,724,715 Culver further describes a number of design modifications to the structures shown in his '101 patent. Those modifications revolve about the use of analogue elements as position sensors rather than the digital encoders shown in his earlier patent.

Despite the acknowledged benefits of Culver's input mechanism, the retrieval of both the horizontal and vertical motion control signals from a single mechanical rotary cylinder presents problems. For instance, if the user wishes (e.g., in a spread sheet) to move the cursor directly across the face of the display, the user must be careful, while longitudinally moving of Culver's cylinder, to prevent the cylinder from rotating. In like manner, if the user wishes to cause the cursor to translate vertically on the display, care must be taken to prevent any longitudinal movement of the cylinder while it is being rotated.

Accordingly, it is an object of this invention to provide an improved cursor control mechanism.

It is another object of this invention to provide an improved cursor control mechanism wherein vertical and horizontal control signals are derived from separately controllable input mechanisms.

It is still another object of this invention to provide a cursor control mechanism which is inexpensive and easily assembled.

## SUMMARY OF THE INVENTION

A hand-controlled mechanism is described for producing signals to move the position of the cursor in a computer display. The mechanism includes a cylindrical means rotatable about an axis, said means having a plurality of sensible markings moveable therewith. First encoder means are provided which produce outputs indicative of the movement of the sensible markings. Slider means, moveable in a direction parallel to the axis of the cylindrical means, but independently thereof, is also provided, the slider means having second movement encoding means associated therewith. Decoder means, responsive to the outputs from both first and second encoder means provide signals to move accordingly, the position of the display cursor.

## DESCRIPTION OF THE DRAWINGS

Fig. 1 is a partial perspective view of the invention.

Fig. 2 is a plan view of the invention shown in Fig. 1.

Fig. 3 is a section taken along line 3-3 in Fig. 1.

Fig. 4 is a view of the plan view of Fig. 2 with the slider bar removed.

## DETAILED DESCRIPTION OF THE INVENTION

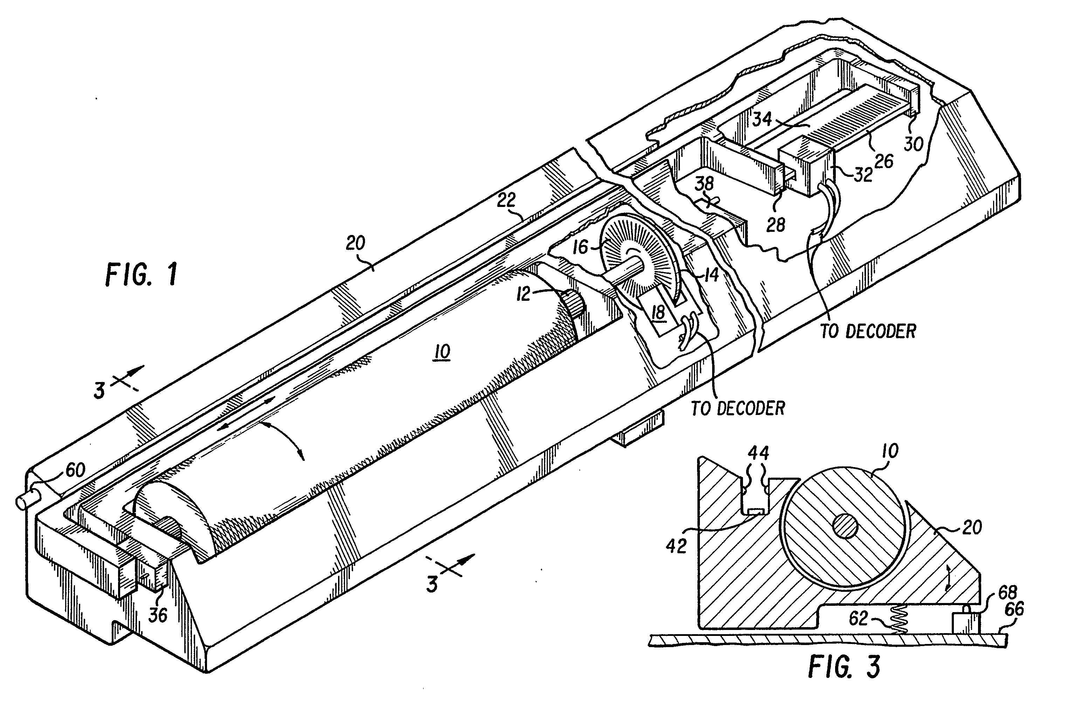

Referring now to Fig. 1, the cursor control mechanism comprises a cylindrical member 10 which is mounted on a splined shaft 12. Shaft 12 is mounted for rotary motion, its splines interacting with internal grooves within cylindrical member 10 to enable the rotary motion of cylindrical member 10 to be translated to shaft 12. At one end of shaft 12, a rotary encoding wheel 14 is mounted so as to be rotatable therewith. Wheel 14 has a plurality of radial markings 16 which pass through optical encoding member 18 as wheel 14 rotates. Optical encoder 18 is provided with a pair of optical sensors which enable both the speed of rotation and direction of wheel 14 to be determined. Reference is made to co-pending U.S. Patent Application Serial Number, entitled "Cursor Control Mechanism", invented by Haririam Ramachandran and assigned to the same assignee as this application. Therein, is disclosed the details of an optical sensing system suitable for use with this invention.

The outputs from optical encoder 18 are fed to a microcomputer which provides signals to a display's cursor control input. Those signals enable the cursor to move either up or down in the vertical direction on the display.

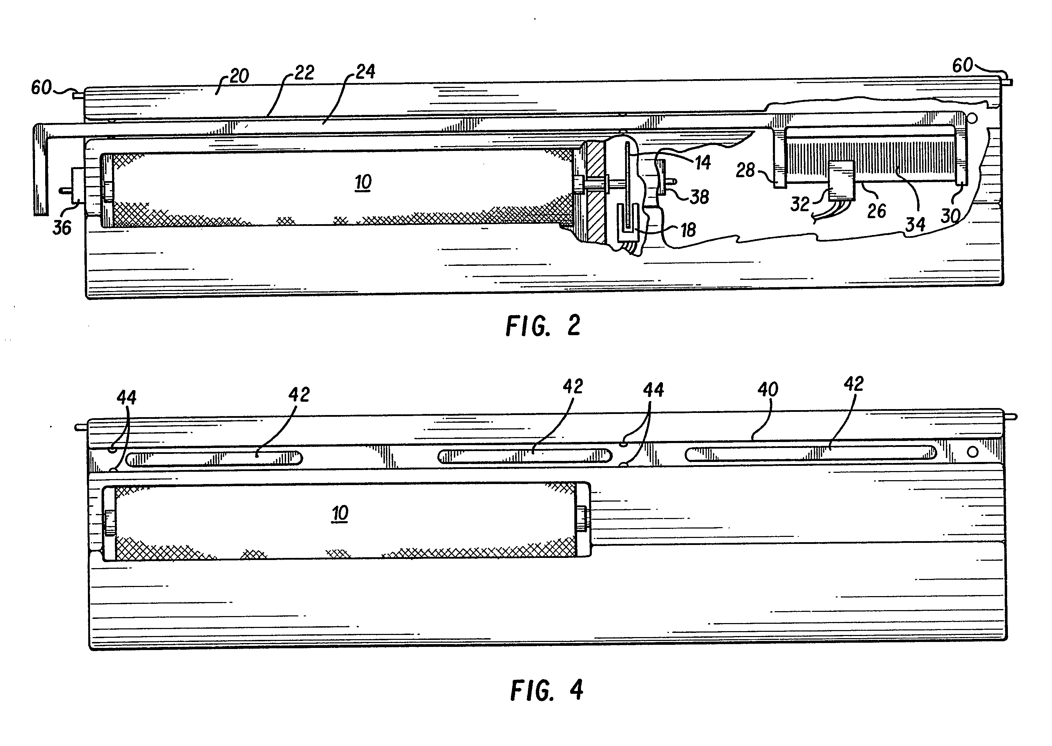

Housing 20, in addition to providing the bearing means for rotary support of cylindrical member 10, additionally is provided with a slot 22. As shown in Figs. 1 and 2, horizontal cursor control signals are derived from the movement of an E-shaped slider bar 24. Slider bar 24 is slidably received within slot 22 and as a result, its elongated arm portion is moveable in a direction parallel to the axis of cylindrical member 10. An encoding strip 26 is attached between extended arms 28 and 30 and is moveable with slider bar 24. An optical encoder 32 senses the movement of the optically reflective markings 34 on encoding strip 26 as it passes therethrough. The operation of encoder 32 is identical to that of encoder 18. A pair of limit switches 36 and 38 are provided at the ends of travel slider bar 24 and set the cursor on the display to either the extreme right or left position (in accordance with which limit switch is depressed by an arm of slider bar 24).

Referring to Figs. 3 and 4, it is to be noted that slot 22 is provided with an extended portion 40 which provides support for one end of slider bar 24. In addition, a plurality of plastic bearing surfaces 42 (e.g., Teflon, a product of the Dupont Company) are emplaced on the bottom of slot 22 as well as a pair of bearing buttons at either end. The surfaces and buttons, in combination with the square configuration of slider bar 24, enable the bar to move easily as the user's fingers push it in either direction.

Housing assembly 20 may be either an independent entity or may be integrated into the frontal portion of a keyboard, preferably on the user side of the shift bar. If it is integrated into the keyboard, housing 20 is mounted for rotation by pins 60 at its either end. As shown in Fig. 3, a pair of springs 62 (only one is shown in Fig. 3) support housing 20 so that it does not rotate about pins 60 in the direction of base 66. A microswitch 68 is depressed when the user pushes down on housing 20 against the offsetting force of springs 62. By pressing the housing, switch 68 enables the movement signals from cylindrical member 10 and bar 24 to effect the position of the cursor on the display. If switch 68 is not depressed, the outputs from cylindrical member 10 and slider bar 24 are inoperative to move the cursor.

The mechanism as shown in Figs. 1-4 can be seen to provide independent rectilinear movement control of the cursor on a computer display. One hand of the user may be used to move cylindrical member 10 while the other hand moves bar 24. Should the user so desire, a single hand can be employed to control both mechanisms with the fingers causing movement of bar 24 while the palm causes rotation of cylindrical member 10.

It is to be understood that the above described embodiments of the invention are illustrative only and that modifications throughout may occur to those skilled in the art. For instance, while the optical encoders are shown as stationary and the encoding strip moveable, the exact opposite structure is acceptable. Accordingly, this invention is not to be regarded as limited to the embodiments disclosed herein, but is to be limited as defined by the appended claims.

## Claims

1. A hand-controlled mechanism for providing signals to a decoder means for moving the position of a cursor in a computer display, the mechanism comprising:
a cylindrical means (10) rotatable about an axis, said means having a plurality of sensible markings; first encoder means (18) for producing an output indicative of the movement of said sensible markings;

slider means (24) movable in a direction parallel to said axis but independently of the rotation of said cylindrical means (10); and

second encoder means (32) associated with said slider means for producing an output indicative of its movement, whereby said decoder means is responsive to outputs from said first and second encoder means (18,32) to produce signals to move the position of said cursor in said display.

2. A mechanism according to claim 1, wherein said slider means (24) is positioned sufficiently close to said cylindrical member (10) so as to be operable by a user's hand, as the same hand simultaneously operates said cylindrical means (10).

3. A mechanism according to claim 2, wherein said slider means (24) is a bar which is slidably held in a support (22), said bar being slidable in a direction parallel to the axis of said cylindrical means (10).

4. A mechanism according to claim 3, wherein said bar is provided with protruding arms (28), said arms interacting with limit switches (38,36) whose outputs provide signals which cause said cursor to appear at either one extremity or another extremity of said computer display.

5. A mechanism according to claim 4, wherein said bar (24) is provided with an encoding strip (26) moveable therewith and an optical sensor (32) for sensing movement of said encoding strip (26), to thereby produce an output indicative of the movement of said bar.

6. A mechanism according to claim 5, further comprising:

housing means (20) for said cylindrical means (10) and said slider means (24), said housing means being selectively moveable; and

switch means (68) responsive to the movement of said housing means (20) for producing a control signal.

7. A mechanism according to claim 6, wherein said housing means (20) is rotatable about an axis under control of a user's hand, to cause actuation of said switch means (68).

FIG. 1

FIG. 3

FIG. 2

FIG. 4